# EUROPÄISCHE PATENTSCHRIFT

(11) **EP 1 919 338 B1**
(45) Veröffentlichungstag und Bekanntmachung des Hinweises auf die Patenterteilung: **18.02.2009**
(21) Anmeldenummer: 06776954.7
(22) Anmeldetag: 18.08.2006
(51) Int. Cl.: A47J 47/20, A47J 47/00

(54) **KOMBINATION EINER SPÜLE UND EINES SPÜLENZUBEHÖRTEILS**
COMBINATION OF A SINK AND A SINK ACCESSORY
ENSEMBLE EVIER ET ACCESSOIRE POUR EVIER

(30) Priorität: 27.08.2005 DE 102005040707
(43) Veröffentlichungstag der Anmeldung: 14.05.2008
(73) Patentinhaber: BLANCO GmbH + Co KG, 75038 Oberderdingen (DE)
(72) Erfinder: REITZIG, Wolfgang, 70771 Leinfelden-Echterdingen (DE); KUCH, Oliver, 75038 Oberderdingen (DE)
(74) Vertreter: Hörner, Andreas
(86) Internationale Anmeldenummer: PCT/EP2006/008159
(87) Internationale Veröffentlichungsnummer: WO 2007/025653

(56) Entgegenhaltungen:
- DE-U1- 20 117 624
- US-B1- 6 309 035

## Beschreibung

Die vorliegende Erfindung betrifft eine Kombination einer Spüle und eines Spülenzubehörteils, das in einer Verschiebestellung, in welcher eine Oberseite des Spülenzubehörteils nach oben weist, längs einer ersten Verschieberichtung (+x) und längs einer entgegengesetzt (antiparallel) zur ersten Verschieberichtung gerichteten zweiten Verschieberichtung (-x) verschiebbar an der Spüle geführt ist.

Eine solche Kombination einer Spüle und eines Spülenzubehörteils in Form eines Schneidbretts ist beispielsweise aus der DE 201 17 624 U1 bekannt.

Das Schneidbrett aus der DE 201 17 624 U1 kann nur in einer Verschiebestellung an der Spüle verwendet werden, in welcher eine Oberseite einer Grundplatte des Schneidbretts eine nach oben weisende Arbeitsfläche des Schneidbretts bildet und Führungselemente des Schneidbretts sich von der Grundplatte nach unten erstrecken.

Die US-A-6309035 offenbart eine Kombination nach dem Oberbegriff von Anspruch 1, wobei das Zubehörteil in eine Stellung bringbar ist, in welcher das Zubehörteil um 180° gedreht ist und die Oberseite des Zubehörteils nach unten weist.

Der vorliegenden Erfindung liegt die Aufgabe zugrunde, eine Kombination einer Spüle und eines Spülenzubehörteils zu schaffen, wobei das Spülenzubehörteil besonders flexibel an der Spüle einsetzbar und ein sicheres Arbeiten an dem Spülenzubehörteil ermöglicht ist.

Diese Aufgabe wird bei einer Kombination einer Spüle und eines Spülenzubehörteils mit den Merkmalen des Oberbegriffs von Anspruch 1 erfindungsgemäß dadurch gelöst, dass das Spülenzubehörteil in einer Arretierstellung, in welcher das Spülenzubehörteil relativ zu der Verschiebestellung um 180° gedreht ist und die Oberseite des Spülenzubehörteils nach unten weist, in eine Anschlagposition bringbar ist, in welcher ein Arretierelement des Spülenzubehörteils so mit mindestens einem an der Spüle vorgesehen Anschlag zusammenwirkt, dass das Spülenzubehörteil an einer Verschiebung in der ersten Verschieberichtung (+x) und/oder in der zweiten Verschieberichtung (-x) relativ zu der Spüle gehindert ist.

Bei der erfindungsgemäßen Kombination aus Spüle und Spülenzubehörteil ist das Spülenzubehörteil reversibel, d.h. in zwei um 180° gegeneinander verdrehten Stellungen (Verschiebestellung und Arretierstellung) auf die Spüle auflegbar und sinnvoll an derselben verwendbar.

Dabei ist das Spülenzubehörteil in der Verschiebestellung in eine Vielzahl verschiedener Positionen relativ zu einem Grundkörper der Spüle bewegbar, beispielsweise von einer Position über einer Abtropffläche der Spüle in eine Position über einem Spülbecken der Spüle, aus welcher in das Spülbecken selbst oder in ein in dem Spülbecken abgestelltes Gefäß hinein gearbeitet werden kann. In der Anschlagposition, an welcher das Spülenzubehörteil in einer Verschiebung relativ zu der Spüle in der ersten Verschieberichtung (+x) und/oder in der zweiten Verschieberichtung (-x) gehindert ist, ist ein besonders sicheres Arbeiten an dem Spülenzubehörteil gewährleistet, da das Spülenzubehörteil nicht aufgrund der bei dem Arbeitsvorgang ausgeübten Kräfte in der ersten Verschieberichtung (+x) und/oder in der zweiten Verschieberichtung (-x) relativ zu der Spüle verrutschen kann.

Die erfindungsgemäße Kombination aus Spüle und Spülenzubehörteil ermöglicht so einen besonders flexiblen Einsatz des Spülenzubehörteils und ein sicheres Arbeiten an demselben.

Vorzugsweise ist das Spülenzubehörteil in der Anschlagposition durch Formschluss zwischen dem Spülenzubehörteil und der Spüle an einer Verschiebung in der ersten Verschieberichtung (+x) und/oder in der zweiten Verschieberichtung (-x) relativ zu der Spüle gehindert.

Bei einer bevorzugten Ausgestaltung der Erfindung ist vorgesehen, dass das Arretierelement sich in der Anschlagposition des Spülenzubehörteils quer zu der ersten Verschieberichtung erstreckt und eine über eine Arbeitsfläche des Spülenzubehörteils vorstehende Berandung dieser Arbeitsfläche bildet.

Die Arbeitsfläche des Spülenzubehörteils ist vorzugsweise im wesentlichen eben ausgebildet.

Das Arretierelement weist vorzugsweise eine Arretierfläche auf, mit welcher das Spülenzubehörteil in der Anschlagposition an einem Anschlag der Spüle anliegt, wobei die Arretierfläche an die Arbeitsfläche des Spülenzubehörteils angrenzt.

Das Arretierelement erstreckt sich vorzugsweise in der Anschlagposition im wesentlichen senkrecht zu der ersten Verschieberichtung (+x).

Eine besonders gute Arretierwirkung des Arretierelements wird erzielt, wenn sich das Arretierelement über mindestens drei Viertel der Ausdehnung des Spülenzubehörteils senkrecht zu der ersten Verschieberichtung (+x) erstreckt.

Das Arretierelement ist vorzugsweise einstückig mit einer Grundplatte des Spülenzubehörteils ausgebildet.

Ferner bildet das Arretierelement vorzugsweise zumindest einen Teil eines erhöhten äußeren Randes des Spülenzubehörteils.

Das Arretierelement kann insbesondere leistenförmig ausgebildet sein.

Als besonders günstig hat es sich erwiesen, wenn das Arretierelement längs seiner Längsrichtung einen im wesentlichen konstanten Querschnitt aufweist.

Bei einer bevorzugten Ausgestaltung der Erfindung ist vorgesehen, dass das Spülenzubehörteil zusätzlich zu dem ersten Arretierelement ein zweites Arretierelement umfasst, das sich quer zu dem ersten Arretierelement erstreckt und in der Anschlagposition so mit einem Anschlag der Spüle zusammenwirkt, dass das Spülenzubehörteil gegen eine Verschiebung in einer quer zu der ersten Verschieberichtung (+x) verlaufenden Richtung (+y) gesichert ist, wobei das zweite Arretierelement einen Teil einer über die Arbeitsfläche des Spülenzubehörteils vorstehenden Berandung dieser Arbeitsfläche bildet.

Das zweite Arretierelement erstreckt sich vorzugsweise im wesentlichen senkrecht zu dem ersten Arretierelement.

Besonders günstig ist es, wenn sich das zweite Arretierelement in der Anschlagposition im wesentlichen parallel zu der ersten Verschieberichtung erstreckt.

Vorzugsweise erstreckt sich das zweite Arretierelement über mindestens drei Viertel der Ausdehnung des Spülenzubehörteils längs der ersten Verschieberichtung (+x).

Das zweite Arretierelement kann insbesondere einstückig mit einer Grundplatte des Spülenzubehörteils ausgebildet sein.

Ferner kann vorgesehen sein, dass das zweite Arretierelement unmittelbar an das erste Arretierelement angrenzt, so dass zwischen dem ersten Arretierelement und dem zweiten Arretierelement kein Zwischenraum verbleibt.

Besonders günstig ist es, wenn das zweite Arretierelement einstückig mit dem ersten Arretierelement ausgebildet ist.

Das zweite Arretierelement kann insbesondere zumindest einen Teil eines erhöhten äußeren Randes des Spülenzubehörteils bilden.

Ferner kann das zweite Arretierelement insbesondere leistenförmig ausgebildet sein.

Besonders günstig ist es, wenn das zweite Arretierelement längs seiner Längsrichtung einen im wesentlichen konstanten Querschnitt aufweist.

Bei einer besonders bevorzugten Ausgestaltung der Erfindung ist vorgesehen, dass das Spülenzubehörteil zusätzlich zu dem ersten Arretierelement und dem zweiten Arretierelement ein drittes Arretierelement aufweist, das sich quer zu dem ersten Arretierelement erstreckt und in der Anschlagposition so mit einem Anschlag der Spüle zusammenwirkt, dass das Spülenzubehörteil gegen eine Verschiebung in einer quer zur ersten Verschieberichtung (+x) verlaufenden Richtung (-y) gesichert ist, wobei das dritte Arretierelement eine über die Arbeitsfläche des Spülenzubehörteils vorstehende Berandung dieser Arbeitsfläche bildet.

Das dritte Arretierelement kann sich im wesentlichen senkrecht zu dem ersten Arretierelement erstrecken.

Vorzugsweise erstreckt sich das dritte Arretierelement in der Anschlagposition im wesentlichen parallel zu der ersten Verschieberichtung (+x).

Ferner ist es günstig, wenn sich das dritte Arretierelement im wesentlichen parallel zu dem zweiten Arretierelement erstreckt.

Vorzugsweise erstreckt sich das dritte Arretierelement über mindestens drei Viertel der Ausdehnung des Spülenzubehörteils längs der ersten Verschieberichtung (+x).

Das dritte Arretierelement kann einstückig mit einer Grundplatte des Spülenzubehörteils ausgebildet sein.

Ferner ist es günstig, wenn das dritte Arretierelement unmittelbar an das erste Arretierelement angrenzt, so dass zwischen dem ersten Arretierelement und dem dritten Arretierelement kein Zwischenraum verbleibt.

Besonders günstig ist es, wenn das dritte Arretierelement einstückig mit dem ersten Arretierelement ausgebildet ist.

Ferner kann vorgesehen sein, dass das dritte Arretierelement zumindest einen Teil eines erhöhten äußeren Randes des Spülenzubehörteils bildet.

Vorzugsweise ist das dritte Arretierelement leistenförmig ausgebildet.

Besonders günstig ist es, wenn das dritte Arretierelement längs seiner Längsrichtung einen im wesentlichen konstanten Querschnitt aufweist.

Bei einer bevorzugten Ausgestaltung der Erfindung ist vorgesehen, dass das erste Arretierelement, das zweite Arretierelement und das dritte Arretierelement zusammen eine im wesentlichen U-förmige, vorzugsweise ununterbrochene Berandung der Arbeitsfläche des Spülenzubehörteils bilden. Durch einen solchen erhöhten Rand ist gewährleistet, dass auf den von dem erhöhten Rand überstrichenen Seiten des Spülenzubehörteils keine Flüssigkeiten von dem Spülenzubehörteil ablaufen und keine Gegenstände von dem Spülenzubehörteil herabfallen können.

Ferner ist es günstig, wenn sich die Arbeitsfläche des Spülenzubehörteils auf mindestens einer Seite direkt bis an den äußeren Rand des Spülenzubehörteils erstreckt. Hierdurch ist gewährleistet, dass es möglich ist, Flüssigkeiten oder Gegenstände über die sich direkt bis an den äußeren Rand des Spülenzubehörteils erstreckende Seite der Arbeitsfläche in ein Spülbecken der Spüle oder in ein unterhalb des Spülenzubehörteils abgestelltes Gefäß zu befördern.

Vorzugsweise ist dabei vorgesehen, dass sich die Arbeitsfläche des Spülenzubehörteils auf einer dem ersten Arretierelement gegenüberliegenden Seite direkt bis an den äußeren Rand des Spülenzubehörteils erstreckt.

Bei einer bevorzugten Ausgestaltung der Erfindung ist ferner vorgesehen, dass eine in der Verschiebestellung des Spülenzubehörteils nach unten weisende Unterseite des Spülenzubehörteils im wesentlichen eben ausgebildet ist. Eine solche im wesentlichen ebene Unterseite des Spülenzubehörteils bildet in der Arretierstellung, in welcher diese Unterseite nach oben weist, eine gut nutzbare zweite Arbeitsfläche des Spülenzubehörteils.

Das Spülenzubehörteil kann insbesondere als ein Schneidbrett ausgebildet sein.

Der Anschlag der Spüle umfasst beispielsweise mindestens eine in einer Abtropffläche der Spüle angeordnete Erhebung.

Bei einer bevorzugten Ausgestaltung der Erfindung ist vorgesehen, dass der Anschlag der Spüle mehrere Erhebungen umfasst, zwischen denen mindestens ein Ablaufkanal ausgebildet ist.

Ferner kann vorgesehen sein, dass an der Spüle mindestens zwei Anschläge vorgesehen sind, welche in der Anschlagposition mit dem Arretierelement des Spülenzubehörteils so zusammenwirken, dass das Spülenzubehörteil sowohl an einer Verschiebung in der ersten Verschieberichtung (+x) als auch an einer Verschiebung in der zweiten Verschieberichtung (-x) relativ zu der Spüle gehindert ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine ausschnittsweise schematische perspektivische Darstellung einer Spüle mit einer Abtropffläche und einem Schneidbrett, das in einer Verschiebestellung in einer parallel zum vorderen Spü- lenrand gerichteten ersten Verschieberichtung (+x) und in einer entgegengesetzt zur ersten Verschieberichtung gerichteten zweiten Verschieberichtung (-x) verschiebbar an der Spüle geführt ist;
- Fig. 2: eine schematische Draufsicht von oben auf die Spüle mit Schneidbrett in der Verschiebestellung aus Fig. 1;
- Fig. 3: einen schematischen Querschnitt durch die Spüle mit Schneid- brett in der Verschiebestellung;
- Fig. 4: eine vergrößerte Darstellung des Bereichs I aus Fig. 4;
- Fig. 5: eine ausschnittsweise schematische perspektivische Darstellung der Spüle mit dem Schneidbrett, das relativ zu der Verschiebe- stellung um 180° in eine Arretierstellung gedreht worden ist und sich in einer Anschlagposition an der Spüle befindet, in welcher das Schneidbrett an einer Verschiebung in der ersten Verschiebe- richtung (+x) gehindert ist;
- Fig. 6: eine schematische Draufsicht von oben auf die Spüle mit Schneidbrett in der Anschlagposition;
- Fig. 7: einen schematischen Querschnitt durch die Spüle mit Schneid- brett in der Anschlagposition;
- Fig. 8: eine vergrößerte Darstellung des Bereichs II aus Fig. 7, und
- Fig. 9: eine schematische Draufsicht von oben auf eine zweite Ausfüh- rungsform einer Spüle mit Schneidbrett in einer Anschlagposition, in welcher das Schneidbrett an einer Verschiebung in der ersten Verschieberichtung (+x) und in der zweiten Verschieberichtung (-x) gehindert ist.

Gleiche oder funktional äquivalente Elemente sind in allen Figuren mit denselben Bezugszeichen bezeichnet.

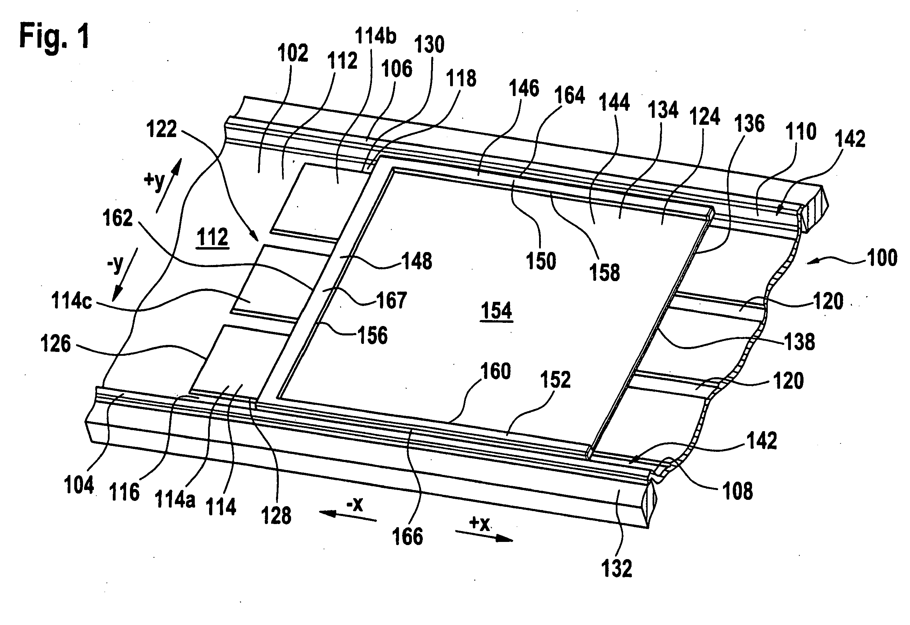

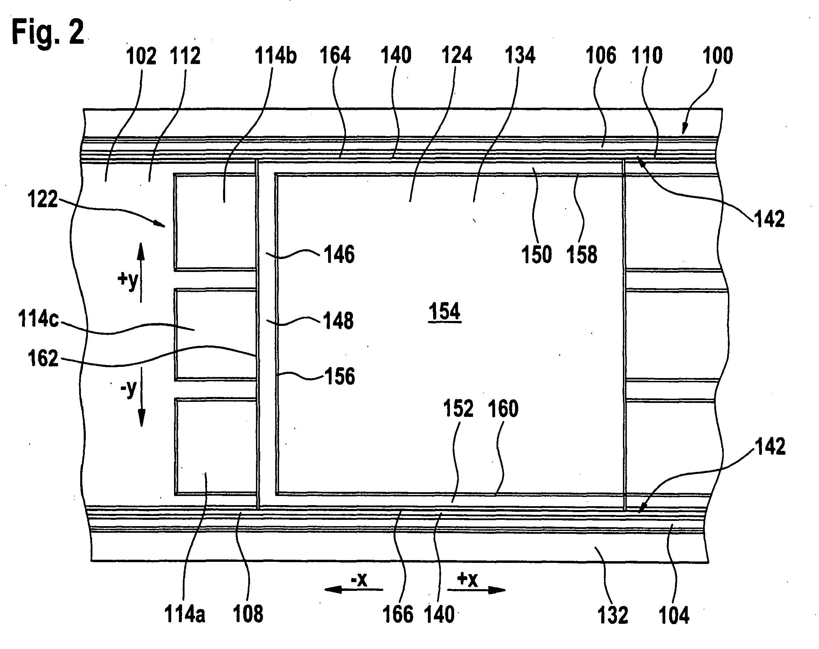

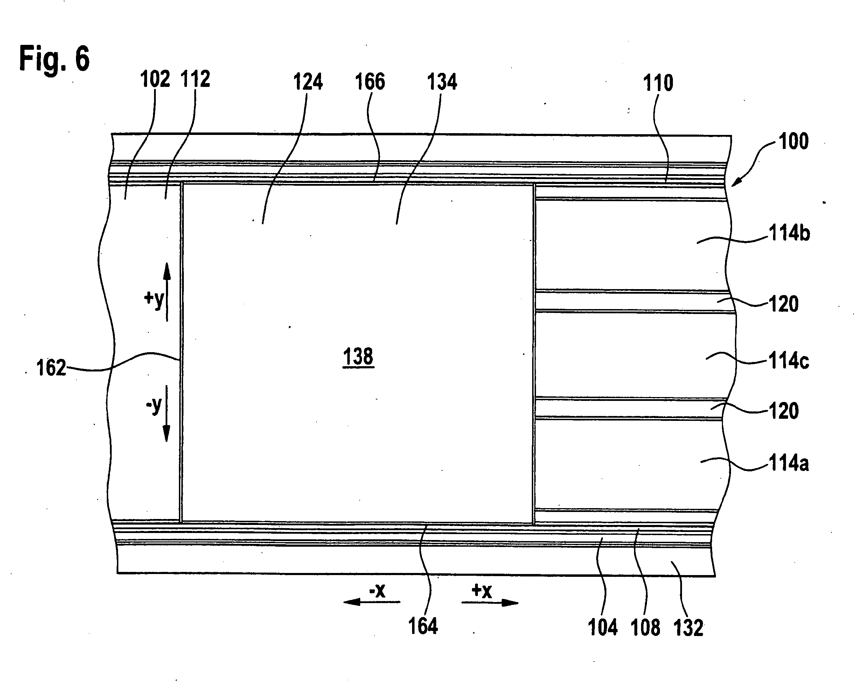

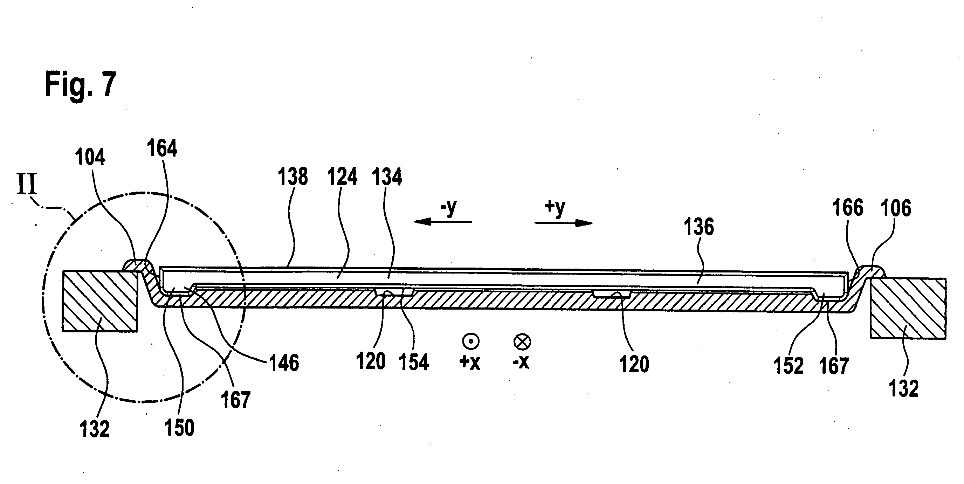

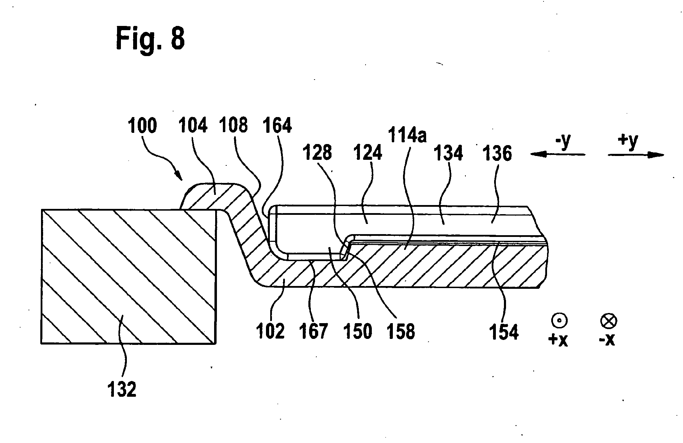

Eine in den Fig. 1 bis 8 dargestellte, als Ganzes mit 100 bezeichnete Spüle umfasst einen Spülengrundkörper 102, beispielsweise aus Edelstahl, aus Keramik oder aus einem Verbundmaterial, an dem ein erhöhter vorderer Spülenrand 104 und ein erhöhter hinterer Spülenrand 106 ausgebildet sind. Der vordere Spülenrand 104 und der hintere Spülenrand 106 fallen jeweils über eine schräge Seitenfläche 108 bzw. 110 zu einer horizontalen, im wesentlichen ebenen Abtropffläche 112 hin ab.

In die Abtropffläche 112 sind mehrere, beispielsweise drei, Erhebungen 114 eingeformt, welche sich parallel zu den Spülenrändern 104, 106 erstrecken, wobei die vordere Erhebung 114a von der schrägen Seitenfläche 108 des vorderen Spülenrandes 104 durch einen vorderen Führungskanal 116 und die hintere Erhebung 114b von der schrägen Seitenfläche 110 des hinteren Spülenrandes 106 durch einen hinteren Führungskanal 118 getrennt sind.

Die vordere Erhebung 114a und die hintere Erhebung 114b der Abtropffläche 112 sind von einer mittleren Erhebung 114c der Abtropffläche 112 durch jeweils einen Wasserablaufkanal 120 getrennt.

Die Erhebungen 114a, 114b und 114c bilden zusammen einen Anschlag 122 der Spüle 100 für ein im folgenden noch näher zu beschreibendes Spülenzubehörteil 124.

Dabei bilden die quer zu den Spülenrändern 104, 106 verlaufenden Stirnflächen der Erhebungen 114 eine erste Anschlagfläche 126 des Anschlags 122. Die parallel zum vorderen Spülenrand 104 verlaufende und der schrägen Seitenfläche 108 gegenüberliegende vordere Seitenfläche der vorderen Erhebung 114a bildet eine zweite Anschlagfläche 128 des Anschlags 122, und die parallel zum hinteren Spülenrand 106 verlaufende und der schrägen Seitenfläche 110 gegenüberliegende hintere Seitenfläche der hinteren Erhebung 114c bildet eine dritte Anschlagfläche 130 des Anschlags 122.

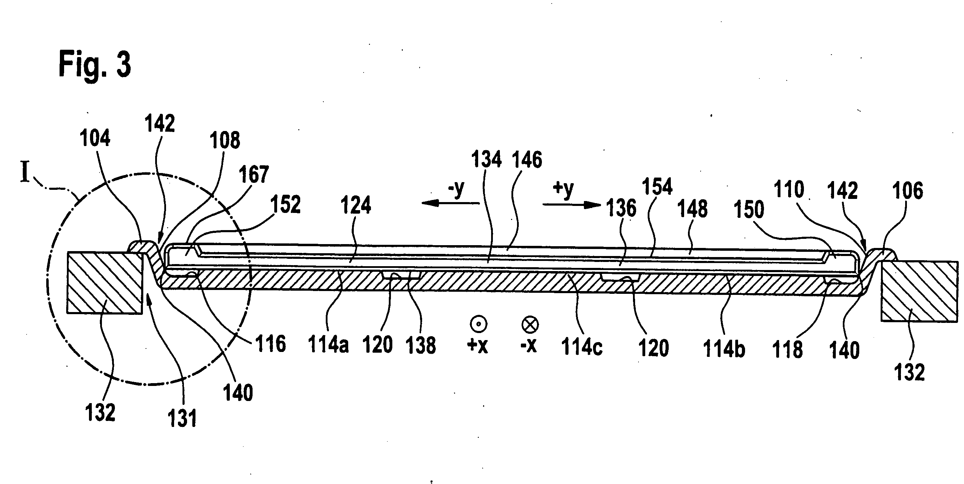

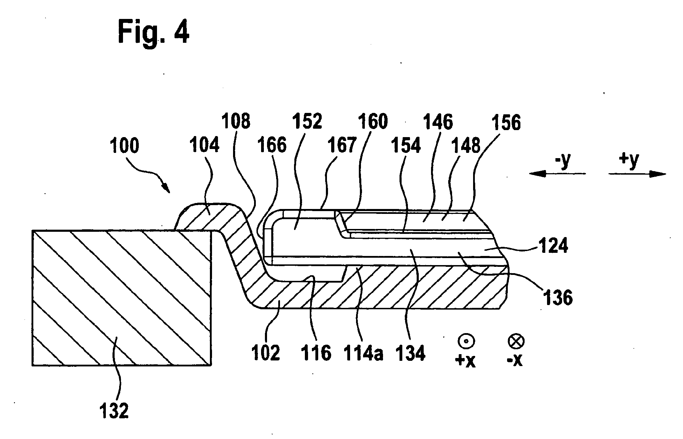

Die Spüle 100 umfasst neben der Abtropffläche 112 noch mindestens ein (nicht dargestelltes) Spülbecken und einen Armaturentragebereich und ist in eine Ausschnittsöffnung 131 einer Arbeitsplatte 132 so eingesetzt, dass die Spülenränder 104, 106 im Randbereich der Ausschnittsöffnung an der Oberseite der Arbeitsplatte 132 aufliegen (siehe Fig. 3 und 4).

Ein zusammen mit der Spüle 100 verwendbares Spülenzubehörteil 124 ist beispielsweise als ein Schneidbrett 134 mit einem Grundkörper 136 in Form einer im wesentlichen quaderförmigen, flachen Platte ausgebildet.

Das Schneidbrett 134 kann aus einem beliebigen Material, beispielsweise aus einem Kunststoffmaterial, aus Holz, aus einem metallischen Material oder aus Glas, gebildet sein.

Die Unterseite 138 des Grundkörpers 136 ist im wesentlichen eben ausgebildet und liegt in der in den Fig. 1 bis 4 dargestellten Verschiebestellung des Schneidbretts 134 flächig auf den Erhebungen 114 der Abtropffläche 112 auf. In dieser Verschiebestellung ist das Schneidbrett 134 in einer parallel zu den Spülenrändern 104, 106 verlaufenden ersten Verschieberichtung (+x) und in einer zu der ersten Verschieberichtung entgegengesetzten zweiten Verschieberichtung (-x) frei relativ zu dem Spülengrundkörper 102 verschiebbar.

Dabei ist das Schneidbrett 134 mit den seitlichen Rändern 140 seiner Unterseite 138 an den schrägen Seitenflächen 108 und 110 des vorderen Spülenrandes 104 bzw. des hinteren Spülenrandes 106 seitlich geführt (siehe Fig. 3 und 4). Die schrägen Seitenflächen 108 und 110 bilden somit zusammen eine Führung 142 für das Schneidbrett 134, welche verhindert, dass sich das Schneidbrett 134 in der Verschiebestellung relativ zu dem Spülengrundkörper 102 in einer zur ersten Verschieberichtung (+x) senkrechten horizontalen ersten Querrichtung (+y) oder in einer zur ersten Querrichtung (+y) entgegengesetzten zweiten Querrichtung (-y) verschiebt.

An der der Unterseite 138 gegenüberliegenden Oberseite 144 ist das Schneidbrett 134 mit einem um drei Seiten des Schneidbretts 134 umlaufenden, im wesentlichen U-förmigen erhöhten Rand 146 versehen, wobei der Steg des U-förmigen erhöhten Randes 146 durch ein leistenförmiges erstes Arretierelement 148 gebildet ist, welches sich am linken Rand des Schneidbretts 134 in der y-Richtung über im wesentlichen die gesamte Breite des Schneidbretts 134 erstreckt. Die beiden Schenkel des U-förmigen erhöhten Randes 146 sind durch ein leistenförmiges zweites Arretierelement 150, das sich am hinteren Rand des Schneidbretts 134 im wesentlichen senkrecht zu dem ersten Arretierelement 148 in der +x-Richtung über im wesentlichen die gesamte Länge des Schneidbretts 134 erstreckt, und durch ein im wesentlichen leistenförmiges drittes Arretierelement 152, das sich am vorderen Rand des Schneidbretts 134 im wesentlichen senkrecht zu dem ersten Arretierelement 148 in der +x-Richtung über im wesentlichen die gesamte Länge des Schneidbretts 134 erstreckt, gebildet.

Die drei Arretierelemente 148, 150 und 152 beranden zusammen drei Seiten einer zwischen diesen Arretierelementen aufgespannten im wesentlichen rechteckigen Arbeitsfläche 154 des Schneidbretts 134. Auf der vierten Seite erstreckt sich die Arbeitsfläche 154 direkt bis an den äußeren Rand des Schneidbretts 134.

Die Arretierelemente 148, 150 und 152 weisen jeweils eine zur Arbeitsfläche 154 hin gerichtete seitliche Arretierfläche 156, 158 bzw. 160 auf, welche unmittelbar an die Arbeitsfläche 154 angrenzt.

Diese Arretierflächen 156, 158 und 160 können vertikal ausgerichtet oder gegen die Vertikale geneigt sein (siehe Fig. 3 und 4).

Die Arretierelemente 148, 150 und 152 weisen ferner den Arretierflächen 156, 158 bzw. 160 abgewandte äußere Randflächen 162, 164 bzw. 166 auf, welche mit jeweils einer äußeren Randfläche des Grundkörpers 136 des Schneidbretts 134 bündig sind.

Dadurch, dass die Oberseite 144 des Schneidbretts 134 mit dem erhöhten Rand 146 versehen ist, ist gewährleistet, dass auf den von dem erhöhten Rand 146 überstrichenen Seiten des Schneidbretts 134 keine Flüssigkeiten von dem Schneidbrett 134 ablaufen und keine Gegenstände von dem Schneidbrett 134 herabfallen können.

Dadurch, dass der erhöhte Rand 146 nicht ganz um die Oberseite 144 des Schneidbretts 134 umläuft, sondern an einer Seite des Schneidbretts 134 unterbrochen ist, kann von der Arbeitsfläche 154 des Schneidbretts 134 aus über diesen offenen Rand hinweg beispielsweise in das Spülbecken der Spüle 100 oder in ein in dem Spülbecken abgestelltes Gefäß (beispielsweise einen Topf) hinein gearbeitet werden; insbesondere können Gegenstände und Flüssigkeiten von der Arbeitsfläche 154 aus über den offenen Rand in das Spülbecken oder ein darin aufgenommenes Gefäß abgestreift werden.

Das Schneidbrett 134 bietet somit die Vorteile einer flachen, einseitig offenen Schale.

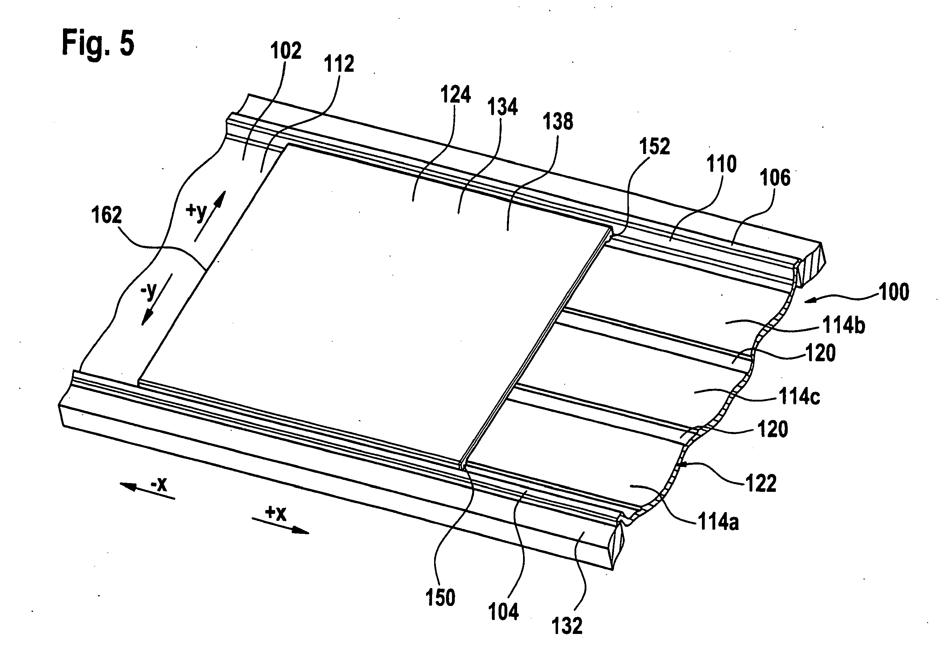

Aus der in den Fig. 1 bis 4 dargestellten Verschiebestellung kann das Schneidbrett 134 durch Drehen um einen Winkel von 180° um eine parallel zur x-Richtung verlaufende Mittelachse des Schneidbretts 134 in die in den Fig. 5 bis 8 dargestellte Arretierstellung überführt werden, in welcher die Unterseite 138 des Schneidbretts 134 nach oben und die Oberseite 144 nach unten weisen.

In dieser Orientierung kann das Schneidbrett 134 in der in den Fig. 5 bis 8 dargestellten Anschlagposition auf den Spülengrundkörper 102 aufgelegt werden, in welcher der erhöhte Rand 146 des Schneidbretts 134 mit seiner nach unten weisenden Oberseite 167 flächig auf der Abtropffläche 112 aufliegt, die Arbeitsfläche 154 des Schneidbretts 134 sich über die Erhebungen 114 der Abtropffläche 112 der Spüle 100 hinweg erstreckt und das erste Arretierelement 148 des Schneidbretts 134 mit der ersten Arretierfläche 156 an der ersten Anschlagfläche 126 des durch die Erhebungen 114 gebildeten Anschlags 122 der Spüle 100 anschlägt, so dass das Schneidbrett 134 durch das Anschlagen des ersten Arretierelements 148 an dem Anschlag 122 an einer Verschiebung in der ersten Verschieberichtung (+x) relativ zu dem Spülengrundkörper 102 gehindert ist.

Ferner stoßen in dieser Anschlagposition auch das zweite Arretierelement 150 mit der zweiten Arretierfläche 158 an der zweiten Anschlagfläche 128 und das dritte Arretierelement 152 mit der dritten Arretierfläche 160 an der dritten Anschlagfläche 130 des Anschlags 122 der Spüle 100 an, so dass das Schneidbrett 134 in der Anschlagposition durch das Anstoßen des zweiten Arretierelements 150 an dem Anschlag 122 an einer Verschiebung in der ersten Querrichtung (+y) und durch das Anstoßen des dritten Arretierelements 152 an dem Anschlag 122 an einer Verschiebung in der zweiten Querrichtung (-y) relativ zu dem Spülengrundkörper 102 gehindert ist.

Das Schneidbrett 134 ist somit in der Arretierstellung in eine Anschlagposition an dem Spülengrundkörper 102 bringbar, in welcher das erste Arretierelement 148 so mit dem an der Spüle 100 vorgesehen Anschlag 122 zusammenwirkt, dass das Schneidbrett 134 an einer Verschiebung in der ersten Verschieberichtung (+x) relativ zu der Spüle 100 gehindert ist.

Die Anschlagposition bietet den Vorteil eines sichereren Arbeitens, insbesondere Schneidens, auf der Arbeitsfläche 154, da das Schneidbrett 134 nicht aufgrund der bei dem Arbeitsvorgang ausgeübten Kräfte in der ersten Verschieberichtung (+x) verrutschen kann.

Durch die vorstehend beschriebene Ausgestaltung des Schneidbretts ist das Schneidbrett reversibel, d.h. in zwei um 180° gegeneinander verdrehten Stellungen (Verschiebestellung und Arretierstellung) auf die Spüle 100 auflegbar und sinnvoll an derselben verwendbar.

Insbesondere bildet die ebene Unterseite 138 des Schneidbretts 134 in der Arretierstellung eine gut nutzbare zweite Arbeitsfläche des Schneidbretts 134.

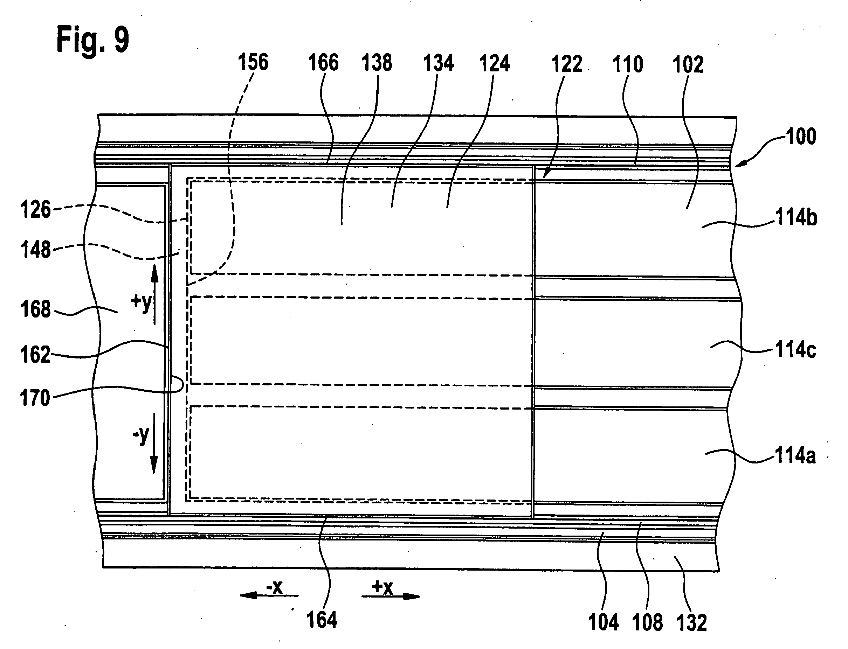

Eine in Fig. 9 dargestellte zweite Ausführungsform einer Spüle 100 mit daran angeordnetem Spülenzubehörteil 124 in Form eines Schneidbretts 134 unterscheidet sich von der vorstehend beschriebenen ersten Ausführungsform lediglich dadurch, dass an dem Spülengrundkörper 102 ein zweiter Anschlag 168 in Form einer Erhebung mit einer der ersten Anschlagfläche 126 des ersten Anschlags 122 zugewandten und sich in der y-Richtung erstreckenden Anschlagfläche 170 ausgebildet ist.

Der Abstand zwischen der Anschlagfläche 170 des zweiten Anschlags 168 und der ersten Anschlagfläche 126 des ersten Anschlags 122 ist dabei nur geringfügig größer als die Breite des ersten Arretierelements 148 des Schneidbretts 134, so dass das erste Arretierelement 148 in der in Fig. 9 dargestellten Anschlagposition nicht nur mit der ersten Arretierfläche 156 an der ersten Anschlagfläche 126 des ersten Anschlags 122 anstößt, sondern zugleich mit der ersten Randfläche 162 an der Anschlagfläche 170 des zweiten Anschlags 168 anstößt, so dass bei dieser Ausführungsform das Schneidbrett 134 in der Anschlagposition auch an einer Verschiebung in der zweiten Verschieberichtung (-x) relativ zu dem Spülengrundkörper 102 gehindert ist.

Hierdurch wird bei dieser zweiten Ausführungsform eine besonders stabile Arretierung des Spülenzubehörteils 124 an der Spüle 100 erzielt.

Statt durch eine zusätzliche Erhebung an dem Spülengrundkörper 102 kann der zweite Anschlag 168 der Spüle 100 auch als ein Teil des Spülenrandes, also beispielsweise als ein linker Spülenrand, ausgebildet sein.

Im übrigen stimmt die zweite Ausführungsform einer Spüle 100 mit Spülenzubehörteil 124 mit der in den Fig. 1 bis 8 dargestellten ersten Ausführungsform überein, auf deren vorstehende Beschreibung insoweit Bezug genommen wird.

## Patentansprüche

1. Kombination einer Spüle (100) und eines Spülenzubehörteils (124), das in einer Verschiebestellung, in welcher eine Oberseite (144) des Spülenzubehörteils (124) nach oben weist, längs einer ersten Verschieberichtung (+x) und längs einer entgegengesetzt zur ersten Verschieberichtung (+x) gerichteten zweiten Verschieberichtung (-x) verschiebbar an der Spüle (100) geführt ist,
**dadurch gekennzeichnet,**
**dass** das Spülenzubehörteil (124) in einer Arretierstellung, in welcher das Spülenzubehörteil (124) relativ zu der Verschiebestellung um 180° gedreht ist und die Oberseite (144) des Spülenzubehörteils (124) nach unten weist, in eine Anschlagposition bringbar ist, in welcher ein Arretierelement (148) des Spülenzubehörteils (124) so mit mindestens einem an der Spüle (100) vorgesehenen Anschlag (122; 168) zusammenwirkt, dass das Spülenzubehörteil (124) an einer Verschiebung in der ersten Verschieberichtung (+x) und/oder in der zweiten Verschieberichtung (-x) relativ zu der Spüle (100) gehindert ist.

2. Kombination nach Anspruch 1, **dadurch gekennzeichnet, dass** das Arretierelement (148) sich in der Anschlagposition des Spülenzubehörteils (124) quer zu der ersten Verschieberichtung (+x) erstreckt und eine über eine Arbeitsfläche (154) des Spülenzubehörteils (124) vorstehende Berandung dieser Arbeitsfläche (154) bildet.

3. Kombination nach Anspruch 2, **dadurch gekennzeichnet, dass** die Arbeitsfläche (154) im wesentlichen eben ist.

4. Kombination nach einem der Ansprüche 2 oder 3, **dadurch gekennzeichnet, dass** das Arretierelement (148) eine Arretierfläche (156) aufweist, mit welcher das Spülenzubehörteil (124) in der Anschlagposition an einem Anschlag (122) der Spüle (100) anliegt, wobei die Arretierfläche (156) an die Arbeitsfläche (154) des Spülenzubehörteils (124) angrenzt.

5. Kombination nach einem der Ansprüche 2 bis 4, **dadurch gekennzeichnet, dass** sich das Arretierelement (148) in der Anschlagposition im wesentlichen senkrecht zu der ersten Verschieberichtung (+x) erstreckt.

6. Kombination nach einem der Ansprüche 2 bis 5, **dadurch gekennzeichnet, dass** sich das Arretierelement (148) über mindestens drei Viertel der Ausdehnung des Spülenzubehörteils (124) senkrecht zu der ersten Verschieberichtung (+x) erstreckt.

7. Kombination nach einem der Ansprüche 2 bis 6, **dadurch gekennzeichnet, dass** das Arretierelement (148) zumindest einen Teil eines erhöhten äußeren Randes (146) des Spülenzubehörteils (124) bildet.

8. Kombination nach einem der Ansprüche 2 bis 7, **dadurch gekennzeichnet, dass** das Arretierelement (148) leistenförmig ausgebildet ist.

9. Kombination nach einem der Ansprüche 2 bis 8, **dadurch gekennzeichnet, dass** das Arretierelement (148) längs seiner Längsrichtung einen im wesentlichen konstanten Querschnitt aufweist.

10. Kombination nach einem der Ansprüche 2 bis 9, **dadurch gekennzeichnet, dass** das Spülenzubehörteil (124) ein zweites Arretierelement (150) umfasst, das sich quer zu dem ersten Arretierelement (148) erstreckt und in der Anschlagposition so mit einem Anschlag (122) der Spüle (100) zusammenwirkt, dass das Spülenzubehörteil (124) gegen eine Verschiebung in einer quer zu der ersten Verschieberichtung (+x) verlaufenden Richtung (+y) gesichert ist, wobei das zweite Arretierelement (150) einen Teil einer über die Arbeitsfläche (154) des Spülenzubehörteils (124) vorstehenden Berandung (146) dieser Arbeitsfläche (154) bildet.

11. Kombination nach Anspruch 10, **dadurch gekennzeichnet, dass** das zweite Arretierelement (150) sich im wesentlichen senkrecht zu dem ersten Arretierelement (148) erstreckt.

12. Kombination nach einem der Ansprüche 10 oder 11, **dadurch gekennzeichnet, dass** sich das zweite Arretierelement (150) in der Anschlagposition im wesentlichen parallel zu der ersten Verschieberichtung (+x) erstreckt.

13. Kombination nach einem der Ansprüche 10 bis 12, **dadurch gekennzeichnet, dass** das zweite Arretierelement (150) sich über mindestens drei Viertel der Ausdehnung des Spülenzubehörteils (124) längs der ersten Verschieberichtung (+x) erstreckt.

14. Kombination nach einem der Ansprüche 10 bis 13, **dadurch gekennzeichnet, dass** das zweite Arretierelement (150) zumindest einen Teil eines erhöhten äußeren Randes (146) des Spülenzubehörteils (124) bildet.

15. Kombination nach einem der Ansprüche 10 bis 14, **dadurch gekennzeichnet, dass** das zweite Arretierelement (150) leistenförmig ausgebildet ist.

16. Kombination nach einem der Ansprüche 10 bis 15, **dadurch gekennzeichnet, dass** das zweite Arretierelement (150) längs seiner Längsrichtung einen im wesentlichen konstanten Querschnitt aufweist.

17. Kombination nach einem der Ansprüche 10 bis 16, **dadurch gekennzeichnet, dass** das Spülenzubehörteil (124) ein drittes Arretierelement (152) aufweist, das sich quer zu dem ersten Arretierelement (148) erstreckt und in der Anschlagposition so mit einem Anschlag (122) der Spüle (100) zusammenwirkt, dass das Spülenzubehörteil (124) gegen eine Verschiebung in einer quer zur ersten Verschieberichtung (+x) verlaufenden Richtung (-y) gesichert ist, wobei das dritte Arretierelement (152) eine über die Arbeitsfläche (154) des Spülenzubehörteils (124) vorstehende Berandung dieser Arbeitsfläche (154) bildet.

18. Kombination nach Anspruch 17, **dadurch gekennzeichnet, dass** das dritte Arretierelement (152) sich im wesentlichen senkrecht zu dem ersten Arretierelement (148) erstreckt.

19. Kombination nach einem der Ansprüche 17 oder 18, **dadurch gekennzeichnet, dass** das dritte Arretierelement (152) sich in der Anschlagposition im wesentlichen parallel zu der ersten Verschieberichtung (+x) erstreckt.

20. Kombination nach einem der Ansprüche 17 bis 19, **dadurch gekennzeichnet, dass** sich das dritte Arretierelement (152) im wesentlichen parallel zu dem zweiten Arretierelement (150) erstreckt.

21. Kombination nach einem der Ansprüche 17 bis 20, **dadurch gekennzeichnet, dass** sich das dritte Arretierelement (152) über mindestens drei Viertel der Ausdehnung des Spülenzubehörteils (124) längs der ersten Verschieberichtung (+×) erstreckt.

22. Kombination nach einem der Ansprüche 17 bis 21, **dadurch gekennzeichnet, dass** das dritte Arretierelement (152) zumindest einen Teil eines erhöhten äußeren Randes (146) des Spülenzubehörteils (124) bildet.

23. Kombination nach einem der Ansprüche 17 bis 22, **dadurch gekennzeichnet, dass** das dritte Arretierelement (152) leistenförmig ausgebildet ist.

24. Kombination nach einem der Ansprüche 17 bis 23, **dadurch gekennzeichnet, dass** das dritte Arretierelement (152) längs seiner Längsrichtung einen im wesentlichen konstanten Querschnitt aufweist.

25. Kombination nach einem der Ansprüche 17 bis 24, **dadurch gekennzeichnet, dass** das erste Arretierelement (148), das zweite Arretierelement (150) und das dritte Arretierelement (152) zusammen eine im wesentlichen U-förmige Berandung der Arbeitsfläche (154) des Spülenzubehörteils (124) bilden.

26. Kombination nach einem der Ansprüche 1 bis 25, **dadurch gekennzeichnet, dass** die Arbeitsfläche (154) des Spülenzubehörteils (124) sich auf mindestens einer Seite direkt bis an den äußeren Rand des Spülenzubehörteils (124) erstreckt.

27. Kombination nach einem der Ansprüche 2 bis 26, **dadurch gekennzeichnet, dass** sich die Arbeitsfläche (154) des Spülenzubehörteils (124) auf einer dem ersten Arretierelement (148) gegenüberliegenden Seite direkt bis an den äußeren Rand des Spülenzubehörteils (124) erstreckt.

28. Kombination nach einem der Ansprüche 1 bis 27, **dadurch gekennzeichnet, dass** eine in der Verschiebestellung des Spülenzubehörteils (124) nach unten weisende Unterseite (138) des Spülenzubehörteils (124) im wesentlichen eben ausgebildet ist.

29. Kombination nach einem der Ansprüche 1 bis 28, **dadurch gekennzeichnet, dass** das Spülenzubehörteil (124) als ein Schneidbrett (134) ausgebildet ist.

30. Kombination nach einem der Ansprüche 1 bis 29, **dadurch gekennzeichnet, dass** der Anschlag (122) der Spüle (100) mindestens eine in einer Abtropffläche (112) der Spüle (100) angeordnete Erhebung (114) umfasst.

31. Kombination nach einem der Ansprüche 1 bis 30, **dadurch gekennzeichnet, dass** der Anschlag (122) der Spüle mehrere Erhebungen (114a, 114b, 114c) umfasst, zwischen denen mindestens ein Ablaufkanal (120) ausgebildet ist.

32. Kombination nach einem der Ansprüche 1 bis 31, **dadurch gekennzeichnet, dass** an der Spüle (100) mindestens zwei Anschläge (122, 168) vorgesehen sind, welche in der Anschlagposition mit dem Arretierelement (148) des Spülenzubehörteils (124) so zusammenwirken, dass das Spülenzubehörteil (124) sowohl an einer Verschiebung in der ersten Verschieberichtung (+x) als auch an einer Verschiebung in der zweiten Verschieberichtung (-x) relativ zu der Spüle (100) gehindert ist.

## Claims

1. Combination of a sink (100) and a sink accessory part (124) that in a displacement position, in which an upper side (144) of the sink accessory part (124) faces upwards, is disposed on the sink (100) to be displaceable in a first displacement direction (+x) and in a second displacement direction (-x) opposed to the first displacement direction (+x),
**characterised in that** in a locking position, in which the sink accessory part (124) is rotated 180° relative to the displacement position and the upper side (144) of the sink accessory part (124) faces downwards, the sink accessory part (124) can be brought into a stop position, in which a locking element (148) of the sink accessory part (124) cooperates with at least one stop (122; 168) provided on the sink (100) so that a displacement of the sink accessory part (124) relative to the sink (100) in the first displacement direction (+x) and/or in the second displacement direction (-x) is impeded.

2. Combination according to claim 1, **characterised in that** in the stop position of the sink accessory part (124) the locking element (148) extends transversely to the first displacement direction (+x) and forms an edging of a work surface (154) of the sink accessory part (124) that projects beyond this work surface (154).

3. Combination according to claim 2, **characterised in that** the work surface (154) is substantially plane.

4. Combination according to one of claims 2 or 3, **characterised in that** the locking element (148) has a locking surface (156), with which the sink accessory part (124) abuts against a stop (122) of the sink (100) in the stop position, wherein the locking surface (156) adjoins the work surface (154) of the sink accessory part (124).

5. Combination according to one of claims 2 to 4, **characterised in that** in the stop position the locking element (148) extends substantially perpendicularly to the first displacement direction (+x).

6. Combination according to one of claims 2 to 5, **characterised in that** the locking element (148) extends perpendicularly to the first displacement direction (+x) over at least three-quarters of the extent of the sink accessory part (124).

7. Combination according to one of claims 2 to 6, **characterised in that** the locking element (148) forms at least a part of a raised outer edge (146) of the sink accessory part (124).

8. Combination according to one of claims 2 to 7, **characterised in that** the locking element (148) is configured in the form of a ledge.

9. Combination according to one of claims 2 to 8, **characterised in that** the locking element (148) has a substantially constant cross-section in its longitudinal direction.

10. Combination according to one of claims 2 to 9, **characterised in that** the sink accessory part (124) comprises a second locking element (150), which extends transversely to the first locking element (148) and in the stop position cooperates with a stop (122) of the sink (100) so that the sink accessory part (124) is secured against a displacement in a direction (+y) running transversely to the first displacement direction (+x), wherein the second locking element (150) forms a part of an edging (146) of the work surface (154) of the sink accessory part (124) that projects beyond this work surface (154).

11. Combination according to claim 10, **characterised in that** the second locking element (150) extends substantially perpendicularly to the first locking element (148).

12. Combination according to one of claims 10 or 11, **characterised in that** in the stop position the second locking element (150) extends substantially parallel to the first displacement direction (+x).

13. Combination according to one of claims 10 to 12, **characterised in that** the second locking element (150) extends in the first displacement direction (+x) over at least three-quarters of the extent of the sink accessory part (124).

14. Combination according to one of claims 10 to 13, **characterised in that** the second locking element (150) forms at least a part of a raised outer edge (146) of the sink accessory part (124).

15. Combination according to one of claims 10 to 14, **characterised in that** the second locking element (150) is configured in the form of a strip.

16. Combination according to one of claims 10 to 15, **characterised in that** the second locking element (150) has a substantially constant cross-section in its longitudinal direction.

17. Combination according to one of claims 10 to 16, **characterised in that** the sink accessory part (124) comprises a third locking element (152), which extends transversely to the first locking element (148) and in the stop position cooperates with a stop (122) of the sink (100) so that the sink accessory part (124) is secured against a displacement in a direction (-y) running transversely to the first displacement direction (+x), wherein the third locking element (152) forms an edging of the work surface (154) of the sink accessory part (124) that projects beyond this work surface (154).

18. Combination according to claim 17, **characterised in that** the third locking element (152) extends substantially perpendicularly to the first locking element (148).

19. Combination according to one of claims 17 or 18, **characterised in that** in the stop position the third locking element (152) extends substantially parallel to the first displacement direction (+x).

20. Combination according to one of claims 17 to 19, **characterised in that** the third locking element (152) extends substantially parallel to the second locking element (150).

21. Combination according to one of claims 17 to 20, **characterised in that** the third locking element (152) extends in the first displacement direction (+x) over at least three-quarters of the extent of the sink accessory part (124).

22. Combination according to one of claims 17 to 21, **characterised in that** the third locking element (152) forms at least a part of a raised outer edge (146) of the sink accessory part (124).

23. Combination according to one of claims 17 to 22, **characterised in that** the third locking element (152) is configured in the form of a strip.

24. Combination according to one of claims 17 to 23, **characterised in that** the third locking element (152) has a substantially constant cross-section in its longitudinal direction.

25. Combination according to one of claims 17 to 24, **characterised in that** the first locking element (148), the second locking element (150) and the third locking element (152) together form a substantially U-shaped edging of the work surface (154) of the sink accessory part (124).

26. Combination according to one of claims 1 to 25, **characterised in that** the work surface (154) of the sink accessory part (124) extends directly as far as the outer edge of the sink accessory part (124) on at least one side.

27. Combination according to one of claims 2 to 26, **characterised in that** the work surface (154) of the sink accessory part (124) extends directly as far as the outer edge of the sink accessory part (124) on a side opposite the first locking element (148).

28. Combination according to one of claims 1 to 27, **characterised in that** an underside (138) of the sink accessory part (124) facing downwards in the displacement position of the sink accessory part (124) is substantially plane.

29. Combination according to one of claims 1 to 28, **characterised in that** the sink accessory part (124) is configured as a cutting board (134).

30. Combination according to one of claims 1 to 29, **characterised in that** the stop (122) of the sink (100) comprises at least one raised section (114) arranged in a draining surface (112) of the sink (100).

31. Combination according to one of claims 1 to 30, **characterised in that** the stop (122) of the sink comprises a plurality of raised sections (114a, 114b, 114c), between which at least one drainage channel (120) is configured.

32. Combination according to one of claims 1 to 31, **characterised in that** at least two stops (122, 168) are provided on the sink (100), which in the stop position cooperate with the locking element (148) of the sink accessory part (124) so that a displacement of the sink accessory part (124) in the first displacement direction (+x) as well as a displacement in the second displacement direction (-x) relative to the sink (100) are impeded.

## Revendications

1. Ensemble formé par un évier (100) et un accessoire d'évier (124) qui, dans une position de déplacement, dans laquelle une face supérieure (144) de l'accessoire d'évier (124) est orientée vers le haut, est guidé en translation sur l'évier (100) le long d'une première direction de déplacement (+x) et le long d'une deuxième direction de déplacement (-x) opposée à la première direction de déplacement (+x), **caractérisé en ce que,** l'accessoire d'évier (124) dans une position d'arrêt, dans laquelle l'accessoire d'évier (124) est tourné de 180° par rapport à la position de déplacement et la face supérieure (144) de l'accessoire d'évier (124) est orientée vers le bas, peut être amené dans une position de butée, dans laquelle un élément d'arrêt (148) de l'accessoire d'évier (124) coopère avec au moins une butée (122 ; 168) prévue sur l'évier (100), de telle sorte que l'accessoire d'évier (124) est empêché de se déplacer dans la première direction de déplacement (+x) et/ou dans la deuxième direction de déplacement (-x) par rapport à l'évier (100).

2. Ensemble selon la revendication 1, **caractérisé en ce que** l'élément d'arrêt (148), dans la position de butée de l'accessoire d'évier (124), s'étend transversalement à la première direction de déplacement (+x) et forme un rebord d'une surface de travail (154) de l'accessoire d'évier (124), faisant saillie au-dessus de ladite surface de travail (154).

3. Ensemble selon la revendication 2, **caractérisé en ce que** la surface de travail (154) est sensiblement plane.

4. Ensemble selon la revendication 2 ou 3, **caractérisé en ce que** l'élément d'arrêt (148) comporte une surface d'arrêt (156), par laquelle l'accessoire d'évier (124), dans la position de butée, est en appui contre une butée (122) de l'évier (100), la surface d'arrêt (156) étant adjacente à la surface de travail (154) de l'accessoire d'évier (124).

5. Ensemble selon l'une quelconque des revendications 2 à 4, **caractérisé en ce que** l'élément d'arrêt (148), dans la position de butée, s'étend sensiblement perpendiculairement à la première direction de déplacement (+x).

6. Ensemble selon l'une quelconque des revendications 2 à 5, **caractérisé en ce que** l'élément d'arrêt (148) s'étend perpendiculairement à la première direction de déplacement (+x) sur au moins les trois quarts de la dimension de l'accessoire d'évier (124).

7. Ensemble selon l'une quelconque des revendications 2 à 6, **caractérisé en ce que** l'élément d'arrêt (148) forme au moins une partie d'un bord (146) extérieur surélevé de l'accessoire d'évier (124).

8. Ensemble selon l'une quelconque des revendications 2 à 7, **caractérisé en ce que** l'élément d'arrêt (148) est réalisé sous la forme d'une baguette.

9. Ensemble selon l'une quelconque des revendications 2 à 8, **caractérisé en ce que** l'élément d'arrêt (148) a une section sensiblement constante le long de sa direction longitudinale.

10. Ensemble selon l'une quelconque des revendications 2 à 9, **caractérisé en ce que** l'accessoire d'évier (124) comporte un deuxième élément d'arrêt (150) qui s'étend transversalement au premier élément d'arrêt (148) et, dans la position de butée, coopère avec une butée (122) de l'évier (100), de telle sorte que l'accessoire d'évier (124) est immobilisé contre tout déplacement dans une direction (+y), transversale à la première direction de déplacement (+x), le deuxième élément d'arrêt (150) formant une partie d'un rebord d'une surface de travail (154) de l'accessoire d'évier (124), faisant saillie au-dessus de ladite surface de travail (154).

11. Ensemble selon la revendication 10, **caractérisé en ce que** le deuxième élément d'arrêt (150) s'étend sensiblement perpendiculairement au premier élément d'arrêt (148).

12. Ensemble selon la revendication 10 ou 11, **caractérisé en ce que** le deuxième élément d'arrêt (150), dans la position de butée, s'étend sensiblement parallèlement à la première direction de déplacement (+x).

13. Ensemble selon l'une quelconque des revendications 10 à 12, **caractérisé en ce que** le deuxième élément d'arrêt (150) s'étend le long de la première direction de déplacement (+x) sur au moins les trois quarts de la dimension longitudinale de l'accessoire d'évier (124).

14. Ensemble selon l'une quelconque des revendications 10 à 13, **caractérisé en ce que** le deuxième élément d'arrêt (150) forme au moins une partie d'un bord (146) extérieur surélevé de l'accessoire d'évier (124).

15. Ensemble selon l'une quelconque des revendications 10 à 14, **caractérisé en ce que** le deuxième élément d'arrêt (150) est réalisé sous la forme d'une baguette.

16. Ensemble selon l'une quelconque des revendications 10 à 15, **caractérisé en ce que** le deuxième élément d'arrêt (150) a une section sensiblement constante le long de sa direction longitudinale.

17. Ensemble selon l'une quelconque des revendications 10 à 16, **caractérisé en ce que** l'accessoire d'évier (124) comporte un troisième élément d'arrêt (152) qui s'étend transversalement au premier élément d'arrêt (148) et, dans la position de butée, coopère avec une butée (122) de l'évier (100), de telle sorte que l'accessoire d'évier (124) est immobilisé contre tout déplacement dans une direction (-y), transversale à la première direction de déplacement (+x), le troisième élément d'arrêt (152) formant un rebord d'une surface de travail (154) de l'accessoire d'évier (124), faisant saillie au-dessus de ladite surface de travail (154).

18. Ensemble selon la revendication 17, **caractérisé en ce que** le troisième élément d'arrêt (152) s'étend sensiblement perpendiculairement au premier élément d'arrêt (148).

19. Ensemble selon la revendication 17 ou 18, **caractérisé en ce que** le troisième élément d'arrêt (152), dans la position de butée, s'étend sensiblement parallèlement à la première direction de déplacement (+x).

20. Ensemble selon l'une quelconque des revendications 17 à 19, **caractérisé en ce que** le troisième élément d'arrêt (152) s'étend sensiblement parallèlement au deuxième élément d'arrêt (150).

21. Ensemble selon l'une quelconque des revendications 17 à 20, **caractérisé en ce que** le troisième élément d'arrêt (152) s'étend le long de la première direction de déplacement (+x) sur au moins les trois quarts de la dimension longitudinale de l'accessoire d'évier (124).

22. Ensemble selon l'une quelconque des revendications 17 à 21, **caractérisé en ce que** le troisième élément d'arrêt (152) forme au moins une partie d'un bord (146) extérieur surélevé de l'accessoire d'évier (124).

23. Ensemble selon l'une quelconque des revendications 17 à 22, **caractérisé en ce que** le troisième élément d'arrêt (152) est réalisé sous la forme d'une baguette.

24. Ensemble selon l'une quelconque des revendications 17 à 23, **caractérisé en ce que** le troisième élément d'arrêt (152) a une section sensiblement constante le long de sa direction longitudinale.

25. Ensemble selon l'une quelconque des revendications 17 à 24, **caractérisé en ce que** le premier élément d'arrêt (148), le deuxième élément d'arrêt (150) et le troisième élément d'arrêt (152) forment conjointement un rebord sensiblement en forme de U de la surface de travail (154) de l'accessoire d'évier (124).

26. Ensemble selon l'une quelconque des revendications 1 à 25, **caractérisé en ce que** la surface de travail (154) de l'accessoire d'évier (124) s'étend sur au moins un côté directement jusqu'au bord extérieur de l'accessoire d'évier (124).

27. Ensemble selon l'une quelconque des revendications 2 à 26, **caractérisé en ce que** la surface de travail (154) de l'accessoire d'évier (124) s'étend sur un côté, situé en face du premier élément d'arrêt (148), directement jusqu'au bord extérieur de l'accessoire d'évier (124).

28. Ensemble selon l'une quelconque des revendications 1 à 27, **caractérisé en ce qu'**une face inférieure (138) de l'accessoire d'évier (124), orientée vers le bas dans la position de déplacement de l'accessoire d'évier (124), est sensiblement plane.

29. Ensemble selon l'une quelconque des revendications 1 à 28, **caractérisé en ce que** l'accessoire d'évier (124) est réalisée sous la forme d'une planche de découpe (134).

30. Ensemble selon l'une quelconque des revendications 1 à 29, **caractérisé en ce que** la butée (122) de l'évier (100) comporte au moins une surélévation (114) disposée dans une surface d'égouttage (112) de l'évier (100).

31. Ensemble selon l'une quelconque des revendications 1 à 30, **caractérisé en ce que** la butée (122) de l'évier comporte plusieurs surélévations (114a, 114b, 114c), entre lesquelles est formé au moins un conduit d'évacuation (120).

32. Ensemble selon l'une quelconque des revendications 1 à 31, **caractérisé en ce qu'**il est prévu au moins deux butées (122, 168) sur l'évier (100), lesquelles, dans la position de butée, coopèrent avec l'élément d'arrêt (148) de l'accessoire d'évier (124), de telle sorte que l'accessoire d'évier (124) est empêché de se déplacer tant dans la première direction de déplacement (+x) que dans la deuxième direction de déplacement (-x) par rapport à l'évier (100).
